# EUROPEAN PATENT SPECIFICATION

(11) **EP 0 308 979 B1**
(45) Date of publication and mention of the grant of the patent: **22.12.1993**
(21) Application number: 88115767.1
(22) Date of filing: 24.09.1988
(51) Int. Cl.: G11B 5/70, G11B 5/714, G11B 5/71

(54) **Magnetic disc**
Magnetplatte
Disque magnétique

(30) Priority: 24.09.1987 JP 239490/87
(43) Date of publication of application: 29.03.1989
(73) Proprietor: Hitachi Maxell Ltd., Osaka-fu (JP)
(72) Inventor: Miyake, Akira, Shimamoto-cho Mishima-gun Osaka-fu (JP); Kato, Akira, Takarazuka-shi Hyogo-ken (JP); Mizushima, Kunio, Tsukuba-shi Ibaraki-ken (JP)
(74) Representative: von Kreisler, Alek, Dipl.-Chem.

(56) References cited:
- EP-A- 0 107 984
- EP-A- 0 107 985

## Description

The present invention relates to a magnetic disc such as a floppy disc which is suitable for double sided recording with a large capacity and high density. More particularly, the present invention is directed to improvement of durability of a metal floppy disc which comprises ferromagnetic metal powder to increase a coercive force and a residual magnetic flux density.

### Description of the Related Art

Recently, a video floppy disc has been proposed as a kind of metal floppy disc. Since the video floppy disc uses ferromagnetic metal powder which is much softer than iron oxide type magnetic powder, it has been developed as a single sided disc to which a magnetic head contacts from one side during recording and reproducing so as to keep a pressing force of the magnetic head against the magnetic layer surface at a low level.

However, the single sided disc is not satisfactory in view of a recording capacity.

### SUMMARY OF THE INVENTION

An object of the present invention is to provide a magnetic disc which can be double side recorded, and has a large capacity, a high recording density and also excellent durability.

Accordingly, the present invention provides a magnetic disc according to claim 1.

### DETAILED DESCRIPTION OF THE INVENTION

The present invention has been completed by extensive study on the improvement of the magnetic disc by the present inventors. In the study, the inventors had a basic concept that great improvement of durability is required. To this end, a lubricant which suppresses the wear of the magnetic disc caused by sliding contact between the magnetic layer and the magnetic head was discussed. As the result, it has been found that it is necessary to change the structure of the magnetic layer so that the lubricant is gradually exuded at a constant rate from the surface of the magnetic layer during recording and reproducing, and that it is necessary that the magnetic layer has a sponge like structure having no anisotropy in a circumferential direction so that the magnetic layer can maintain a sufficient amount of the lubricant and the lubricant is exuded evenly on one track.

According to the present invention, spaces for maintaining the lubricant consist of voids between particles of the magnetic powder. Then, how cavities formed by such voids should be formed is examined in the present invention. Although the cavities may be formed by mixing a special foaming agent in the magnetic paint, they are generally formed from bubbles which are generated by evaporation of a solvent contained in the magnetic paint during drying of the coated magnetic paint and trapped by the binder resin which is very quickly hardened during drying of the magnetic paint.

When the magnetic powder has an average particle size of 0.1 to 0.4 µm, preferably 0.1 to 0.3 µm and is contained in the magnetic layer in an amount of 25 to 40 % by volume, preferably 30 to 35 % by volume, suitable cavities are formed, and the magnetic disc has particularly good durability.

When the magnetic powder has an average particle size larger than 0.4 µm, the magnetic layer cannot have a fine sponge like structure, while when it has an average particle size smaller than 0.1 µm, the lubricant is not continuously exuded when the magnetic layer is slid over the magnetic head at a high speed so that the good durability is not achieved.

When the amount of the magnetic powder is less than 25 % by volume of the magnetic layer volume, an amount of the binder resin which binds the magnetic powder particles increases so that the inner diameter of the cavity increases and therefore the lubricant is exuded at once. Thus, the function of gradual supply of the lubricant is lost. When the amount of the magnetic powder is larger than 40 % by volume, the amount of the binder resin becomes small so that the durability is deteriorated.

Since the magnetic disc of the present invention utilized a minute volume of the cavity in the magnetic layer for lubrication, even when the magnetic head is slid over the both magnetic layers having a thickness of about 1 to 3 µm of the magnetic disc, the magnetic disc exhibits good durability.

To avoid stickiness of the magnetic layer surface and to achieve suitable lubrication, the lubricant should be always contained in the magnetic layer in an amount of 80 to 500 mg/m², preferably 150 to 450 mg/m². In the conventional magnetic disc, the amount of the lubricant decreases with time and cannot be maintained in the above range for a long time. According to the present invention, the amount of the lubricant in the magnetic layer can be adjusted in the above range for a long time.

According to the further study by the present inventors, it has been found that the lubricant in the magnetic layer of the magnetic disc has specific behaviors which are not found in a magnetic tape.

That is, in case of the magnetic tape, during recording and reproducing, the lubricant is exuded from the inside of the magnetic layer to the surface and from an upstream to a downstream along the recording direction by a pressure generated by the magnetic head. In case of the magnetic disc, not only the lubricant is exuded along the circumferential direction but also it often migrates in a radial direction.

The reason why the present inventors think so is that they known the fact that when the magnetic layer utilizing acicular magnetic powder which has good lubricating effect on the magnetic layer is applied to the magnetic disc, the lubricating effect is not sufficiently achieved.

A cause for such specific behavior of the lubricant on the magnetic disc has not been clarified. It may be attributed to influence of a centrifugal force generated by rotation of the magnetic disc on the lubricant.

When the magnetic powder particles have no anisotropy such as round particles, no problem arises. However, when the magnetic powder particles having anisotropy such as acicular particles and platelet particles are used, orientation of the cavities for maintaining the lubricant is influenced by orientation of the magnetic powder particles. In this case, since the amount of the exuded lubricant varies from part to part in one track on the magnetic disc, the magnetic disc does not rotate smoothly. Therefore, the cavities in the magnetic layer should be controlled so as to avoid the anisotropy of exuding directions of the lubricant.

In the magnetic disc of the present invention, the cavities are so orientated that the lubricant is exuded along the circumferential direction. To this end, the cavities in the magnetic layer should have no anisotropy or the anisotropy only in the circumferential direction.

To satisfy such requirement, the magnetic layer is subjected to non-orientation treatment or circumferential orientation treatment. The former treatment can be carried out by applying an alternating magnetic field to the magnetic paint coated on the substrate to erase the orientation of the magnetic powder particles which is formed by mechanical roll coating in the longitudinal direction of the substrate. The latter treatment can be carried out by coating the magnetic paint along the circumferential direction (spin coating) or applying a direct current magnetic field to the coated magnetic paint along the circumferential direction.

Japanese Patent Kokai Publication No. 7625/1985 discloses the spin coating, Japanese Patent Kokai Publication No. 63726/1985 discloses application of a magnetic field in the circumferential direction by generation of a magnetic field which is uniformly distributed in a direction perpendicular to a radial direction of the magnetic disc, and Japanese Patent Kokai Publication No. 113328/1985 discloses the non-orientation treatment comprising randomizing the orientation of the magnetic powder particles by arranging plural magnets with alternative inversion of their polarities.

As the substrate of the magnetic disc of the present invention, any of substrate materials which are conventionally used for producing the magnetic disc may be used. Preferably used is a polyethyleneterephthalate film which is generally used as the substrate of the floppy disc.

The ferromagnetic metal powder comprises iron as a main component and optionally at least one non-ferrous metal (e.g. nickel, cobalt, aluminum, silicon, calcium, magnesium, etc.) as an impurity. Compounds of these non-ferrous metals are often used in a reducing step of an oxide of the iron-containing powder to prevent sintering. Further, an alloy powder such as iron/nickel and iron/cobalt can be used as the ferromagnetic metal powder.

The ferromagnetic powder is dispersed in the binder resin to prepare the magnetic paint.

Examples of the binder resin are vinyl chloride/vinyl acetate copolymers, vinyl chloride/vinyl acetate/vinyl alcohol copolymers, polyurethane resins, cellulose resins such as nitrocellulose, acrylonitrile/butadiene resin and the like.

As the lubricant, one having affinity with the binder reins is preferred. Lubricating compounds which are in the liquid state at room temperature such as aliphatic acids, aliphatic acid esters, hydrocarbons, fluorooils and silicone oils can be used.

The lubricant may be added to the magnetic paint by dispersing it in the binder resin together with the ferromagnetic metal powder. Alternatively, a solution of the lubricant in a suitable solvent is applied on the coated and dried magnetic paint containing the ferromagnetic metal powder and the binder resin, or the substrate having the coated and dried magnetic paint containing the ferromagnetic powder and the binder resin is dipped in the solution of the lubricant.

The magnetic paint can be prepared by mixing and dispersing the above components together with an organic solvent such as methyl ethyl ketone, cyclohexanone and toluene by a suitable dispersing apparatus such as a ball mill and a sand mill. In this step, hard inorganic powder or carbon black may be added to reinforce the magnetic coating or to impart electrical conductivity to the magnetic coating. Specific examples of the hard inorganic powder are alumina, chromium oxide and red oxide each having an average particle size of 1 µm or less. Carbon black has an average particle size of about 0.1 µm.

To improve the lubricity of the magnetic coating, powder of a solid material having a layered crystalline structure can be added to the magnetic coating. Such solid material assists the lubricating function of the liquid lubricant. Examples of such solid material are MoS₂, graphite and the like. Among them, graphited carbon black is preferred since it has a good lubricating function irrespective of the orientation of the particle because the particle surfaces are graphited so that all the particle surfaces have the layered crystalline structure. Incorporation of the graphited carbon black in the magnetic coating is disclosed by Japanese Patent Kokai Publication No. 3318/1986.

The surface of the magnetic coating is smoothened by calender roll and the like. By controlling a pressure and a period of time of calender rolling, a ratio of the cavity in the magnetic layer can be adjusted.

### PREFERRED EMBODIMENTS OF THE INVENTION

The present invention will be explained further in detail by following Examples, wherein "parts" are by weight unless otherwise indicated.

### Examples 1-6 and Comparative Examples 1-9

The following components were mixed and dispersed by a sand mill:

| Component | Parts |
|---|---|
| Acicular ferromagnetic metal powder (Major axis: A µm, Axial ratio: 10) | B |
| Vinyl chloride/vinyl acetate/vinyl alcohol copolymer | 50 |
| Polyurethane resin | 30 |
| Oleyl oleate | C |
| Alumina | B/10 |
| Graphited carbon black | B/10 |
| Cyclohexanone | 600 |
| Toluene | 600 |
| Note: As to "A", "B" and "C", see Table 1. | |

To the mixture, trifunctional polyisocyanate compound (20 parts) was added and well mixed by a disper to prepare a magnetic paint. Then, the magnetic paint was coated on both sides of a polyethyleneterephthalate film having a thickness of 75 µm by a roll coater, subjected to the magnetic field orientation treatment, dried and calendered to produce a magnetic sheet having a magnetic layer having a thickness of "D" µm (see Table 1) on each side. The magnetic sheet was cut to form a magnetic disc.

In Examples 1-6 and Comparative 1-8, the magnetic field orientation treatment was done by applying alternating magnetic field of 300 Gauss to randomly orientate the magnetic power particles. In Comparative Example 9, the magnetic field orientation treatment was done by applying N-N facing magnetic field of 300 Gauss to orientate the magnetic powder particles in a running direction.

**Table 1**

| Example No. | Production conditions | | | |
|---|---|---|---|---|
| | A µm | B (parts) | C (parts) | D µm |
| 1 | 0.25 | 456 | 46 | 2.2 |
| 2 | 0.35 | 456 | 46 | 2.2 |
| 3 | 0.25 | 385 | 46 | 2.2 |
| 4 | 0.25 | 550 | 46 | 2.2 |
| 5 | 0.25 | 456 | 17 | 2.2 |
| 6 | 0.25 | 456 | 55 | 2.2 |
| Comp. 1 | 0.08 | 456 | 46 | 2.2 |
| Comp. 2 | 0.45 | 456 | 46 | 2.2 |
| Comp. 3 | 0.25 | 334 | 46 | 2.2 |
| Comp. 4 | 0.25 | 600 | 46 | 2.2 |
| Comp. 5 | 0.25 | 456 | 7 | 2.2 |
| Comp. 6 | 0.25 | 456 | 67 | 2.2 |
| Comp. 7 | 0.25 | 456 | 46 | 0.8 |
| Comp. 8 | 0.25 | 456 | 46 | 3.2 |
| Comp. 9 | 0.25 | 456 | 46 | 2.2 |

Characteristics and performances of the magnetic discs produced in Examples and Comparative Examples are shown in Table 2.

A magnetic powder content (% by volume) is determined by dissolving the ferromagnetic metal powder in the magnetic coating in hydrochloric acid, calculating a weight percentage of the ferromagnetic metal powder from the weight difference before and after dissolving and converting the weight percentage to the volume percentage with the specific gravity of the ferromagnetic metal powder of 6.3.

A content of the lubricant is measured by leaching out the lubricant in the magnetic coating with n-hexane and measuring the weight difference before and after leaching.

A remanence ratio is determined as a ratio of a squareness ratio in a coating direction of the magnetic coating to that in a direction perpendicular to the coating direction.

Durability is evaluated by measuring the running number till the magnetic coating is flawed.

A friction coefficient is measured by facing the surface of the magnetic layer after 100,000 times running to an amorphous head with a load of 20 g.

**Table 2**

| Example No. | Magnetic powder content (vol. %) | Lubricant content (mg/m²) | Remanence ratio | Durability x 10⁴ | Friction coefficient |
|---|---|---|---|---|---|
| 1 | 32 | 390 | 1.01 | 1,000 | 0.22 |
| 2 | 32 | 390 | 1.01 | 600 | 0.22 |
| 3 | 27 | 395 | 1.01 | 700 | 0.26 |
| 4 | 38 | 380 | 1.04 | 550 | 0.23 |
| 5 | 32 | 140 | 1.01 | 500 | 0.20 |
| 6 | 32 | 470 | 1.02 | 1,000 | 0.27 |
| Comp. 1 | 32 | 390 | 1.00 | 300 | 0.23 |
| Comp. 2 | 32 | 390 | 1.03 | 400 | 0.31 |
| Comp. 3 | 23 | 410 | 1.01 | 450 | 0.31 |
| Comp. 4 | 42 | 370 | 1.01 | 200 | 0.27 |
| Comp. 5 | 32 | 60 | 1.01 | 100 | 0.21 |
| Comp. 6 | 32 | 600 | 1.02 | 300 | 0.39 |
| Comp. 7 | 32 | 140 | 1.03 | 450^{*1)} | 0.32 |
| Comp. 8 | 32 | 570 | 1.02 | 450^{*1)} | 0.34 |
| Comp. 9 | 32 | 390 | 2.12 | 300^{*2)} | 0.30 |

| | | | | | |
|---|---|---|---|---|---|
| Note: *1) The magnetic layer sticked to the head. | | | | | |
| *2) Irregular rotation occurred. | | | | | |

## Claims

1. A magnetic disc comprising a substrate and magnetic layers which are formed on both surfaces of the substrate and comprises a sponge like structure without anisotropy in circumferential direction of ferromagnetic metal powder, a liquid lubricant and a binder resin, wherein the ferromagnetic metal powder comprises iron, has an average particle size of 0.1 top 0.4 µm and is contained in the magnetic layer in an amount of 25 to 40 % by volume, and the lubricant is contained in the magnetic layer in an amount of 80 to 500 mg/m².

2. The magnetic disc according to claim 1, wherein particles of the ferromagnetic metal powder are in the acicular form, and they are orientated only in a circumferential direction or not orientated in the magnetic layer.

3. The magnetic disc according to claim 1, wherein each magnetic layer has a thickness of 1 to 3 µm.

4. The magnetic disc according to claim 1, wherein the ferromagnetic metal powder has an average particle size of 0.1 to 0.3 µm.

5. The magnetic disc according to claim 1, wherein the ferromagnetic metal powder is contained in the magnetic layer in an amount of 30 to 35 % by volume.

6. The magnetic disc according to claim 1, wherein the lubricant is contained in the magnetic layer in an amount of 150 to 450 mg/m².

## Patentansprüche

1. Magnetische Scheibe, umfassend ein Substrat und magnetische Schichten, die auf beiden Oberflächen des Substrats ausgebildet sind und eine schwammartige Struktur, ohne Anisotropie in Umfangsrichtung, eines ferromagnetischen Metallpulvers, ein flüssiges Gleitmittel und ein Bindemittelharz umfassen, worin das ferromagnetische Metallpulver Pulver Eisen umfaßt, eine mittlere Teilchengröße von 0,1 bis 0,4 µm aufweist und in der magnetischen Schicht in einer Menge von 25 bis 40 Vol.-% enthalten ist und das Gleitmittel in der magnetischen Schicht in einer Menge von 80 bis 500 mg/m² enthalten ist.

2. Magnetische Scheibe nach Anspruch 1, worin Teilchen des ferromagnetischen Metallpulvers in nadelartiger Form und nur in Umfangsrichtung orientiert oder nichtorientiert in der magnetischen Schicht vorliegen.

3. Magnetische Scheibe nach Anspruch 1, worin jede magnetische Schicht eine Dicke von 1 bis 3 µm besitzt.

4. Magnetische Scheibe nach Anspruch 1, worin das ferromagnetische Metallpulver eine mittlere Teilchengröße von 0,1 bis 0,3 µm besitzt.

5. Magnetische Scheibe nach Anspruch 1, worin das ferromagnetische Metallpulver in der magnetischen Schicht in einer Menge von 30 bis 35 Vol.-% enthalten ist.

6. Magnetische Scheibe nach Anspruch 1, worin das Gleitmittel in der magnetischen Schicht in einer Menge von 150 bis 450 mg/m² enthalten ist.

## Revendications

1. Disque magnétique comprenant un substrat et des couches magnétiques formées sur les deux surfaces du substrat et qui comprend une structure de type spongieux dépourvue d'anisotropie dans la direction circonférentielle, une poudre métallique ferromagnétique, un lubrifiant liquide et une résine liante, la poudre métallique ferromagnétique comprenant du fer, ayant une granulométrie moyenne de 0,1 à 0,4 µm et étant contenue dans la couche magnétique en une quantité comprise entre 25 et 40 % en volume et le lubrifiant étant contenu dans la couche magnétique en une quantité comprise entre 80 et 500 mg/m².

2. Disque magnétique selon la revendication 1, dans lequel les particules de poudre métallique ferromagnétique ont une forme aciculaire et ne sont orientées que dans la direction circonférentielle ou ne sont pas orientées dans la couche magnétique.

3. Disque magnétique selon la revendication 1, dans lequel chaque couche magnétique a une épaisseur de 1 à 3 µm.

4. Disque magnétique selon la revendication 1, dans lequel la poudre métallique ferromagnétique possède une granulométrie moyenne de 0,1 à 0,3 µm.

5. Disque magnétique selon la revendication 1, dans lequel la poudre métallique ferromagnétique est contenue dans la couche magnétique en une quantité comprise entre 0,30 et 35 % en volume.

6. Disque magnétique selon la revendication 1, dans lequel le lubrifiant est contenu dans la couche magnétique en une quantité comprise entre 150 et 450 mg/m².
